Europäisches Patentamt

European Patent Office

Office européen des brevets

(19)

(11) Numéro de publication : **0 033 267**
**B1**

(12)

# FASCICULE DE BREVET EUROPÉEN

(45) Date de publication du fascicule du brevet :
05.10.83

(51) Int. Cl.³ : **C 03 B 33/10, F 15 B 20/00**

(21) Numéro de dépôt : **81400077.4**

(22) Date de dépôt : **21.01.81**

(54) Tête de découpe pour machine de découpe du verre.

(30) Priorité : **21.01.80 DE 3002071**

(43) Date de publication de la demande :
05.08.81 Bulletin 81/31

(45) Mention de la délivrance du brevet :
05.10.83 Bulletin 83/40

(84) Etats contractants désignés :
BE CH DE FR GB IT LI LU NL SE

(56) Documents cités :
DE A 2 736 614

(73) Titulaire : **SAINT-GOBAIN VITRAGE**
Les Miroirs 18, avenue d'Alsace
F-92400 Courbevoie (FR)
BE CH FR GB IT LI LU NL SE
Vereinigte Glaswerke GmbH
Viktoria Allee 3-5
D-5100 Aachen (DE)
DE

(72) Inventeur : **Schwarzenberg, Norbert**
Wendelinusstrasse 45
D-5120 Herzogenrath (DE)
Inventeur : **Ueberwolf, Heinz**
Vogelsang 1
D-5120 Herzogenrath (DE)
Inventeur : **Kaesmacher, Jakob**
Peltschenweg 27
D-5190 Stolberg-Buesbach (DE)

(74) Mandataire : **Eudes, Marcel et al**
Saint-Gobain Recherche 39 Quai Lucien Lefranc
F-93304 Aubervilliers Cedex (FR)

## Tête de découpe pour machine de découpe du verre

La présente invention concerne la découpe de plaques de verre et plus spécialement une tête de découpe pour machines automatiques de découpe du verre.

Dans ces machines, la tête de découpe est guidée sur la plaque de verre à découper le long de la trajectoire désirée et l'outil de découpe de ladite tête est disposé sur la tige de piston d'un vérin pneumatique pour être abaissé sur la plaque à découper par alimentation du vérin en air comprimé, puis relevé après exécution de la découpe, par mise à l'air libre du vérin. La tête de découpe peut être montée sur des coulisseaux en croix et guidée le long de la trajectoire désirée à l'aide d'un gabarit ou par une commande électronique. Ces têtes de découpe sont décrites en détail, par exemple dans la DE-A-2 736 614.

De telles machines servent en particulier pour découper des vitrages d'automobiles dans des primitifs de verre.

Lors de ces opérations de découpe, les plaques de verre peuvent ne pas être correctement alignées dans la machine de découpe, avoir des angles brisés ou être trop petites pour d'autres raisons. Dans ce cas, l'outil de découpe est entraîné hors de la plaque de verre, sous la pression de son vérin pneumatique il s'abaisse alors plus bas que son niveau normal de travail tout en restant guidé sur sa trajectoire prévue, mais dans la suite de sa course, il ne peut pas remonter sur la plaque de verre et il la heurte donc. Etant donné qu'elle est en général seulement posée sur la table de découpe, elle est déplacée ou même elle est projetée hors de la table, ce qui constitue un risque pour les opérateurs et en outre, endommage ou détruit l'outil de découpe.

L'invention a pour but de donner à une tête de découpe de l'espèce définie plus haut, une structure telle que, si l'outil de découpe sort fortuitement de l'ébauche de verre, il abandonne immédiatement sa position de travail pour revenir en position d'attente.

Selon l'invention, une lumière, c'est-à-dire une ouverture, est prévue dans la paroi du vérin qui commande la position de l'outil de découpe, à une hauteur telle qu'elle est encore tout juste recouverte par le piston dans sa position de travail et qu'elle est dégagée lorsque l'outil, sortant de la plaque de verre, est abaissé en dessous de son plan normal de travail. Cette lumière peut être seulement une ouverture vers l'atmosphère, permettant ainsi d'annuler la pression dans la cavité supérieure du cylindre, mais de préférence, en particulier pour réduire la consommation d'air comprimé, elle est reliée par une conduite à un mano-contacteur qui, lorsqu'il est sollicité pneumatiquement, assure la mise à l'air libre du vérin et la coupure de l'alimentation en air comprimé. De façon plus précise, au moment où l'outil de découpe dépasse le bord de l'ébauche du verre et s'abaisse sous l'effet de la pression qui règne dans le vérin, la lumière est dégagée, le contacteur excité et le vérin mis à l'air libre. Sous l'action de la force antagoniste de moyens de rappel du piston en position de repos, notamment d'un ressort agissant sur sa face inférieure, le piston du vérin retourne à sa position de repos dans laquelle il reste jusqu'au cycle de découpe suivant. On est donc sûr que si la plaque de verre est défectueuse ou mal placée, l'outil de découpe ne peut pas être abimé ni détruit et qu'il ne se produit pas de perturbation par déplacement brutal du verre hors de la table de découpe.

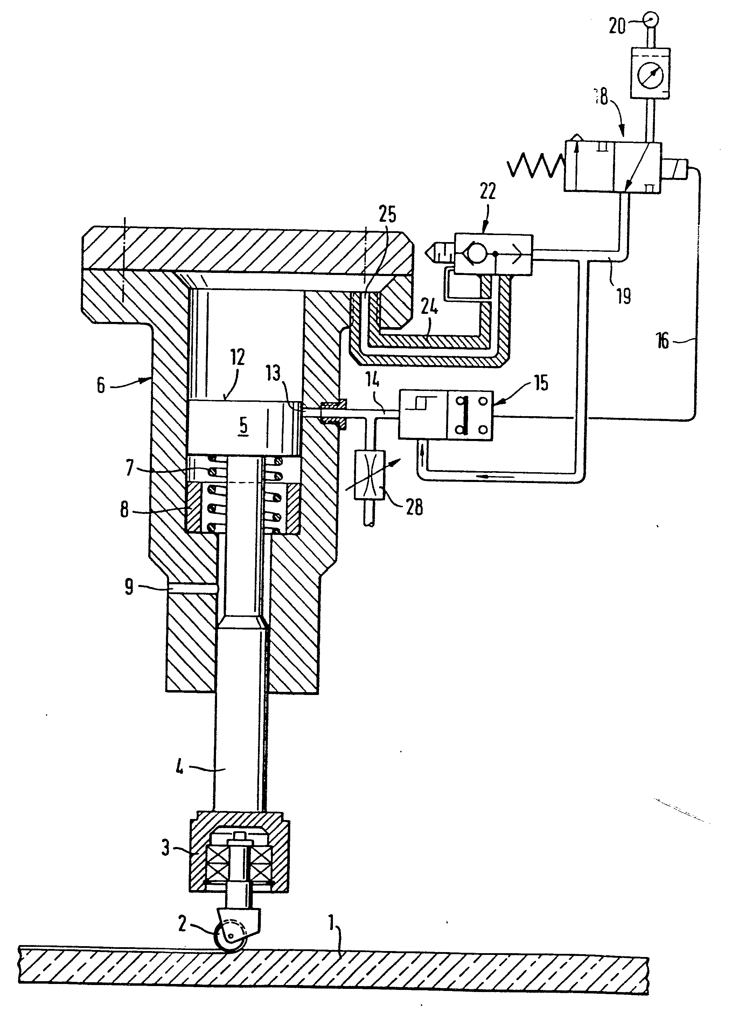

Un mode d'exécution selon l'invention sera décrit ci-après à titre d'exemple non limitatif avec référence au dessin annexé qui représente une coupe schématique d'une tête de découpe pour machine de découpe du verre selon l'invention.

Sur un primitif de verre 1 qui est habituellement rectangulaire, on pratique, au moyen d'une molette de découpe 2 un tracé de découpe de la forme désirée. La molette 2 est montée de manière à pouvoir tourner librement dans sa monture 3 disposée à l'extrémité de la tige 4 d'un piston 5 mobile dans un cylindre 6. Le cylindre 6 est monté sur un chariot dont la trajectoire correspond au tracé de découpe sur la plaque de verre 1. Il est mis sous pression par de l'air comprimé provenant d'une source 20 par l'intermédiaire de la conduite 19 et du raccord 24 du circuit d'alimentation, le raccord 24 débouchant en 25 dans la cavité supérieure du cylindre 6. Dans ce cylindre 6, sous le piston 5, à l'intérieur d'une bague de butée 8, est disposé un ressort à boudin 7 dont le rôle est de rappeler le piston 5 à sa position de repos, donc ici vers le haut, aussitôt que le cylindre 6 n'est plus alimenté en air comprimé. Des perforations 9 prenant naissance dans la cavité du cylindre située sous le piston 5 et débouchant à l'air libre permettent le maintien d'une pression constante dans ladite cavité.

A une hauteur légèrement inférieure à celle occupée par la face supérieure 12 du piston 5 lorsque celui-ci se trouve dans la position de travail représentée sur la figure, est prévue une lumière 13 dans la paroi du cylindre 6, à laquelle est raccordé un tuyau de pression 14 conduisant à un contacteur pneumatique 15. Ce contacteur engendre un signal électrique lorsqu'il est soumis à une élévation de pression. Une telle élévation de pression se produit lorsque le piston 5 dégage la lumière 13, la mettant ainsi en communication avec la cavité supérieure sous pression du cylindre 6. Ce signal est véhiculé par une ligne de commande 16 jusqu'à un relais distributeur 18 disposé sur le circuit d'alimentation du cylindre 6 en aval de la source 20 d'air comprimé. Recevant le signal, le relais 18 coupe la pression dans la conduite 19, la met à l'air libre et commande simultanément l'ouverture d'une valve d'aération rapide 22 placée sur le circuit d'alimentation en air comprimé du cylindre 6, entre la conduite 19 et le raccord 24. L'ouverture de cette vanne met rapidement la cavité supérieure du cylindre 6 en communication avec l'atmosphère. Libéré de la pression qui s'exerçait sur sa face supérieure, le piston remonte alors sous l'effet du ressort 7.

Afin que la montée du piston 5 s'effectue aussitôt après dégagement de la lumière 13, le contacteur 15 est monté directement sur le chariot portant le vérin de découpe 6. De cette manière, tout d'abord la valve 22 est directement reliée au cylindre 6 par le raccord 24. De ce fait, lors de la mise à l'air libre du tuyau 19, l'air comprimé qui se trouve dans le cylindre 6 peut s'échapper directement dans l'atmosphère. Ceci permet aussi de faire réagir le piston 5 avec le moins d'inertie possible.

En outre, le tuyau de pression 14 conduisant en 15 est très court, de sorte qu'il n'introduit aucun retard dans la réponse dudit contacteur. Avantageusement, de ce tuyau 14 part vers l'atmosphère une dérivation 28, à fuite réglable, permettant ainsi de laisser échapper en permanence vers l'atmosphère un air de fuite qui pénétrerait par l'ouverture 13, par exemple à cause d'un défaut d'étanchéité du piston du à son usure, ce qui évite que ne se constitue progressivement dans le tuyau 14, une pression qui déclencherait intempestivement le processus de commutation du contacteur 15.

## Revendications

1. Tête de découpe pour machine automatique de découpe du verre comportant un outil de découpe porté par la tige (4) de piston (5) d'un vérin pneumatique (6) mobile verticalement possédant des moyens de rappel (7) du piston (5) en position de repos, amené en position de travail lorsque ledit vérin est alimenté en air comprimé caractérisée en ce que dans la paroi du vérin (6) est prévue une lumière (13) à une hauteur telle qu'elle est tout juste recouverte par le piston (5) du vérin (6) lorsque l'outil de découpe est en position de travail, et telle qu'elle est dégagée pour mettre le vérin (6) à l'air libre lorsque l'outil de découpe et le piston sont en dessous de leur position normale de travail.

2. Tête de découpe selon la revendication 1, caractérisée en ce que la lumière (13) est reliée à un contacteur (15) qui commande un relais distributeur (18) placé sur le circuit d'alimentation en air comprimé du vérin, lequel relais distributeur met le vérin à l'air libre.

3. Tête de découpe selon la revendication 2, caractérisée en ce qu'une valve d'aération rapide (22) également commandée par le relais (18), est reliée à la cavité supérieure du cylindre de vérin.

4. Tête de découpe selon une des revendications 2 ou 3, caractérisée en ce que sur la conduite reliant la lumière (13) au contacteur (15) est prévue une dérivation (28) à fuite vers l'atmosphère, réglable.

5. Tête de découpe selon l'une quelconque des revendications 2 à 4, caractérisée en ce que le contacteur (15) est disposé au voisinage immédiat du vérin (5), sur le chariot qui le porte de préférence.

## Claims

1. Cutting head for an automatic machine for cutting glass comprising a cutting tool carried by the stem (4) of a piston (5) of a pneumatic actuator (6) which is movable vertically having means (7) for returning the piston (5) to a rest position, brought to a working position when said actuator is fed with compressed air characterised in that in the wall of the actuator (6) there is provided an opening (13) at such a height that it is just covered by the piston (5) of the actuator (6) when the cutting tool is in its working position, and that it is disengaged to open the actuator (6) to the atmosphere when the cutting tool and the piston are below their normal working position.

2. Cutting head according to claim 1 characterised in that the opening (13) is connected to a contact element (15) which operates a distributor relay (18) placed in the circuit for feed of compressed air to the actuator, which distributor relay opens the actuator to the atmosphere.

3. Cutting head according to claim 2, characterised in that a rapid ventilation valve (22) also operated by the relay (18) is connected to the upper chamber of the cylinder of the actuator.

4. Cutting head according to one of claims 2 and 3, characterised in that the duct connecting the opening (13) to the contact element (15) is provided with an adjustable vent to the atmosphere (28).

5. Cutting head according to any one of claims 2 to 4 characterised in that the contact element (15) is arranged in the immediate neighbourhood of the actuator (5), preferably on the carriage which carries it.

## Ansprüche

1. Schneidkopf für automatische Glasschneidmaschinen mit einem von der Stange (4) des Kolbens (5) eines vertikal arbeitenden, Rückstellmittel (7) für den Kolben (5) in seine ruhestellung aufweisenden pneumatischen Zylinders (6) getragenen Schneidwerkzeug, das bei Beaufschlagung des Zylinders mit Druckluft in die Arbeitsstellung geführt wird, dadurch gekennzeichnet, daß in der Wand des Zylinders (6) eine Bohrung (13) in einer solchen Höhe vorgesehen ist, daß sie von dem Kolben (5) des Zylinders (6) gerade bedeckt ist, wenn sich das Schneidwerkzeug in Arbeitsstellung befindet, und freigegeben ist, um den Zylinder (6) mit der freien Atmosphäre in Verbindung zu setzen, wenn sich das Schneidwerkzeug und der Kolben unterhalb ihrer normalen Arbeitsstellung befinden.

2. Schneidkopf nach Anspruch 1, dadurch gekennzeichnet, daß die Bohrung (13) an einem Kontaktgeber (15) angeschlossen ist, der ein Verteilerrelais (18) steuert, das im druckluftversorgungskreis des Zylinders sitzt und den Zylinder an die freie Atmosphäre anschließt.

3. Schneidkopf nach Anspruch 2, dadurch gekennzeichnet, daß ein ebenfalls vom Relais (18) gesteuertes Schnellentlüftungsventil (22) an den oberen Hohlraum des Zylinders angeschlossen ist.

4. Schneidkopf nach einem der Ansprüche 2 oder 3, dadurch gekennzeichnet, daß die die Bohrung (13) mit dem Kontaktgeber (15) verbindende Leitung mit einem einstellbaren Bypaß (28) in die Atmosphäre versehen ist.

5. Schneidkopf nach einem oder mehreren der Ansprüche 2 bis 4, dadurch gekennzeichnet, daß der Kontaktgeber (15) in unmittelbarer Nachbarschaft des Zylinders (5), vorzugsweise auf dem ihn tragenden Wagen angeordnet ist.

0 033 267